(19) Europäisches Patentamt
European Patent Office
Office européen des brevets

(11) EP 2 779 831 B1

(12) **EUROPEAN PATENT SPECIFICATION**

(45) Date of publication and mention of the grant of the patent:
**13.06.2018 Bulletin 2018/24**

(21) Application number: **12813665.2**

(22) Date of filing: **20.12.2012**

(51) Int Cl.:
*A01N 43/80* (2006.01) *A01N 25/28* (2006.01)
*C09D 5/14* (2006.01) *A01P 1/00* (2006.01)

(86) International application number:
**PCT/US2012/070915**

(87) International publication number:
**WO 2013/101657 (04.07.2013 Gazette 2013/27)**

(54) **MICROCAPSULES**

MIKROKAPSELN

MICROCAPSULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 US 201161580433 P**

(43) Date of publication of application:
**24.09.2014 Bulletin 2014/39**

(73) Proprietor: **Dow Global Technologies LLC**
**Midland, MI 48674 (US)**

(72) Inventors:
- **TOMLINSON, Ian A.**
  **Midland, MI 48642 (US)**
- **WAGNER, Nicole L.**
  **Midland, MI 48640 (US)**

(74) Representative: **Houghton, Mark Phillip et al**
**Patent Outsourcing Limited**
**1 King Street**
**Bakewell, Derbyshire DE45 1DZ (GB)**

(56) References cited:
**WO-A1-2006/032019 US-B2- 6 486 099**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 779 831 B1

## Description

It is often desired to provide a microcapsule in which a water-insoluble compound is encapsulated in a shell that contains an amino resin. One reason for doing so, for example, is to provide the water-insoluble compound in a form that can be incorporated into a liquid coating composition, so that a dried layer of that liquid coating composition may be formed on a substrate, so that when the coated substrate is submerged in water, the water-insoluble compound will be gradually released into the water.

US Patent 6,486,099 describes a method of making microcapsules. That method involves a core material, a first coating step, and a second coating step. The second coating step involves forming a polycondensate of an amino resin prepolymer. It has been discovered that microcapsules made by the methods disclosed in US Patent 6,486,099 have the undesirable trait that, after the microcapsules are stored in the dry state, their ability to release the core material is diminished or eliminated. That is, after the storage in the dry state, when the microcapsules are subsequently exposed to seawater, the release of the core material is diminished or eliminated. WO2006/032019 relates to microencapsulated compositions of isothiazolone derivatives and other water insoluble biocides or antifouling agents, in particular 4,5 dichloro 2 n-octyl-3(2H)-isothiazolone(DCOIT), useful in marine antifouling coatings and paints.

It is desired to provide microcapsules that maintain a useful amount of their ability to release core material, even after they have been stored in the dry state.

The following is a statement of the invention.

The present invention, in its various aspects, is as set out in the accompanying claims.

The first aspect of the present invention is composition comprising microcapsules, wherein said microcapsules comprise a core and an outer shell, wherein said core comprises a water-insoluble biocide that is 4,5-dichloro-2-n-octyl-4-isothiazolin-3-one (DCOIT), and wherein said outer shell comprises one or more amino resin that is a reaction product of reactants comprising (a) one or more monomer polyamine, (b) one or more aldehyde, and (c) one or more compound (c) selected from the group consisting of additive diamines, additive diols, additive amino-alcohols, and mixtures thereof.

The second aspect of the present invention is a method of making the composition of the first aspect.

The following is a detailed description of the invention.

As used herein, the following terms have the designated definitions, unless the context clearly indicates otherwise.

The size of a spherical particle is characterized by its diameter. For a particle that is not spherical, the "diameter" herein is the diameter of a sphere with the same volume as the particle. A shell material is said herein to "surround" a core particle if, when the object formed by the combination of the shell material and the core material is considered, that object meets the following criteria: the object contains some volume that is made of the composition of the core particle, and at least 50% or more of the surface area of the microcapsule, based the total area of the surface of the microcapsule, is made of the composition of the shell material.

A microcapsule is a particle having a core surrounded by an outer shell and having diameter of 0.1 micrometers to 200 micrometers. The composition of the outer shell is different from the composition of the core. One or more inner shell may be present in between the core and the outer shell.

A collection of particles may be characterized by D[4,3], which is the volume weighted mean diameter.

A compound is water-insoluble if the maximum amount of that compound that will dissolve in 100 g of water at 25°C is 1 g or less. A compound is water-soluble if the amount of that compound that will dissolve in 100 g of water at 25°C is more than 1 g.

As used herein a "resin" is a polymer. A polymer is a relatively large molecule made up of the reaction products of smaller chemical repeat units. Polymer molecular weights can be measured by standard methods such as, for example, size exclusion chromatography (SEC, also called gel permeation chromatography or GPC). Polymers have weight-average molecular weight (Mw) of 1,000 or more. Polymers may be linear, branched, star-shaped, or a mixture thereof. Polymers that are fully crosslinked are considered to have molecular weight that is infinite. Molecules that can react with each other to form the repeat units of a polymer are known herein as "monomers."

An amine group is $-NH_2$. A diamine is a compound having exactly two amine groups. A polyamine is a compound whose molecule has two or more amine groups.

An amino resin is a polymer that is a reaction product of reactants that include one or more aldehyde and one or more amine of a type known herein as a "monomer amine." As used herein, a monomer amine is a compound that has at least one amine group of a type known herein as a "monomer amine group." A monomer amine group is a group having structure I or structure II or structure III:

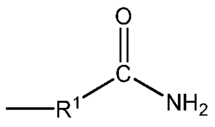
I

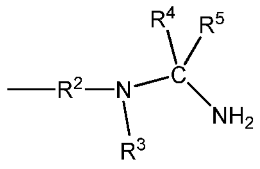
II

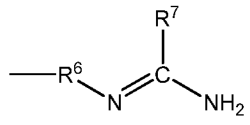
III

$R^1$ is an unsubstituted or substituted amino group or is an unsubstituted or substituted organic group. Each of $R^2$ and $R^6$ is, independently of each other, an unsubstituted or substituted organic group. Each of $R^3$, $R^4$, and $R^5$, independently of each other, is hydrogen or is an unsubstituted or substituted organic group. $R^2$ is optionally connected to $R^4$ or $R^5$ to form a ring. $R^6$ is optionally connected to $R^7$ to form a ring. The N and C atoms between $R^6$ and $R^7$ may form part or all of a conjugated sequence or part of an aromatic ring. A monomer polyamine is a polyamine that has two or more monomer amine groups.

Another type of amine is defined herein as an "additive amine." An additive amine has one or more amine group of a type defined herein as an "additive amine group." An additive amine group is a group having the structure IV:

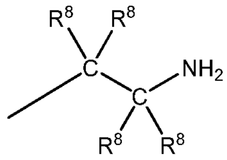
IV

Each $R^8$ is independently hydrogen or a substituted or unsubstituted organic group. No $R^8$ is a substituted or unsubstituted amino group. An additive diamine is a diamine in which both amine groups are additive amine groups.

An alcohol is an organic compound having one or more hydroxyl group. A diol is an alcohol that has exactly two hydroxyl groups. One type of alcohol is defined herein as an "additive alcohol." An additive alcohol contains one or more hydroxyl group of a type defined herein as an "additive hydroxyl group." An additive hydroxyl group is a group having the structure V:

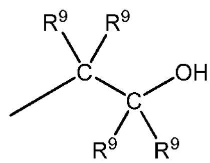
V

Each $R^9$ is independently hydrogen or a substituted or unsubstituted organic group. No $R^9$ is a substituted or unsubstituted amino group. An additive diol is a diol in which both hydroxyl groups are additive hydroxyl groups.

As used herein, an amino-alcohol is a compound that has exactly one amine group and one or more hydroxyl group. An "additive amino-alcohol" is an amino-alcohol that has one additive amine group and one or more additive hydroxyl groups.

A "dispersion" is a collection of discrete particles distributed throughout a continuous medium. The particles may be solid or liquid or a mixture thereof. A dispersion is said to be a dispersion "in water" if the continuous medium is an aqueous medium. A continuous medium is "aqueous" if the composition of the continuous medium is 50% or more water, by weight based on the weight of the continuous medium. A continuous medium is "non-aqueous" if the composition of the continuous medium is less than 50% water by weight based on the weight of the continuous medium.

An amino prepolymer is a reaction product of reactants including one or more monomer polyamine and formaldehyde. An amino prepolymer has molecular weight of less than 1,000.

A biocide is a compound that is capable of inhibiting the growth of, or killing, one or more species of bacteria, algae, or marine fouling organisms. Marine fouling organisms tend to grow on surfaces that are submerged under water and include hard and soft fouling organisms, including algae, tunicates, hydroids, bivalves, bryozoans, polychaete worms, sponges, and barnacles.

A coating composition is a composition that is capable of being applied as a layer on the surface of a substrate and capable of forming a dry layer (the "dry coating") that adheres to the surface of the substrate.

A marine coating composition is a coating composition that is capable of forming a dry coating on the surface of a marine object. After formation of the dry coating, the dry coating will adhere to the surface for a usefully long time, even when some or all of the coated surface remains under water for significant amounts of time (i.e., at least one hour per day). Marine objects are those that are put to use in environments in which some or all of the object is under water for significant amounts of time. Examples of marine objects include ships, piers, docks, pilings, fishnets, heat exchangers, dams, and piping structures, such as intake screens.

Seawater is water from a sea or ocean. On average, seawater in the world's oceans has a salinity of about 3.5 wt% and a average density at the ocean surface of 1.025 g/ml. Artificial seawater is a mixture of water with dissolved mineral salts that simulates seawater.

A marine coating composition that is effective at inhibiting the growth of one or more marine fouling organism is a marine anti-fouling (MAF) coating composition. A marine anti-foulant is a compound that is added to a marine coating composition and that improves the ability of the marine coating composition to inhibit the growth of one or more marine fouling organism.

A liquid composition is in the liquid state in a standard atmosphere over a temperature range that includes 0°C to 60°C.

As used herein, when a ratio of two quantities is said to be "X: 100 or more," it is meant that the ratio is Y: 100, where Y is equal to or greater than X. Similarly, when a ratio of two quantities is said to be "Z:100 or less," it is meant that the ratio is W:100, where W is equal to or less than Z.

The composition of the present invention comprises microcapsules. The composition of the present invention preferably has D[4,3] of 0.1 micrometer or larger; more preferably 2 micrometer or larger. The composition of the present invention preferably has D[4,3] of 100 micrometer or smaller; more preferably 50 micrometer or smaller; more preferably 30 micrometer or smaller.

The outer shell of the microcapsule contains one or more amino resin. The amino resin preferably contains a reaction product of reactants that include one or more of urea, melamine, and mixtures thereof. More preferred amino resins contain a reaction product of reactants that include urea and melamine.

To characterize an amino resin that contains a reaction product of reactants that include urea and melamine, it is useful to examine the weight ratio ("UM ratio") of urea used in making the amino resin to melamine used in making the resin. In preferred outer shells, the UM ratio is 50:100 or more; more preferably 75:100 or more. In preferred outer shells, the UM ratio is 200:100 or less; more preferably 133:100 or less.

The amino resin is a reaction product of reactants that include one or more aldehyde. Preferred is formaldehyde.

The amino resin is a reaction product of reactants that include one or more difunctional compound (herein called "compound (c)") selected from additive diamines, additive diols, additive amino-alcohols, and mixtures thereof. Preferred additive diamines have at least one additive amine group having structure IV in which every $R^8$ is alkyl or hydrogen. More preferred additive diamines have at least one additive amine group having structure IV in which every $R^8$ is methyl or hydrogen. More preferred additive diamines have at least one additive amine group having structure IV in which every $R^8$ is hydrogen. Preferred are additive diamines in which the two additive amine groups are identical to each other. Preferred additive diamines are alkyl diamines and diamines in which two amine groups are attached to a skeleton that is made of two or more alkyl groups attached to each other through a bridge having structure -NH-. Preferred additive diamines are ethylene diamine and diethylene triamine.

Preferred additive diols have at least one additive hydroxyl group having structure V in which the carbon atom attached to the OH group shown in structure V is not part of any aromatic ring. More preferred additive diols have no aromatic ring. More preferred additive diols have at least one additive hydroxyl group having structure V in which every $R^9$ is alkyl or hydrogen. More preferred additive diols have at least one additive hydroxyl group having structure V in which every $R^9$ is methyl or hydrogen. More preferred additive diols have at least one additive hydroxyl group having structure V in which every $R^9$ is hydrogen. Preferred are additive diols in which the two additive hydroxyl groups are identical to each other. Preferred additive diols are alkyl diols and ether diols. Preferred additive diols are ethylene glycol; 1,4-butanediol; and diethylene glycol.

Preferred additive amino-alcohols are alkanolamines, which have structure VI:

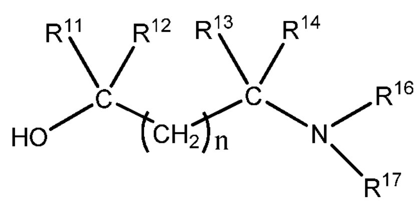

VI

$R^{11}$ and $R^{12}$ are each independently hydrogen or alkyl; $R^{13}$ and $R^{14}$ are each independently hydrogen, alkyl, or hydroxyl-substituted alkyl; n is 0 to 10; and $R^{16}$ and $R^{17}$ are each independently hydrogen or hydroxyl-substituted alkyl. Preferably, $R^{11}$ is hydrogen or methyl. Preferably, $R^{12}$ is hydrogen or methyl. Preferably, $R^{13}$ is hydrogen, methyl, or $-CH_2OH$. Preferably, $R^{14}$ is hydrogen, methyl, ethyl, $-CH_2OH$, or $-CHR^{15}CH_2OH$, where $R^{15}$ is hydrogen or methyl. Preferably, $R^{16}$ and $R^{17}$ are each independently hydrogen or structure VII:

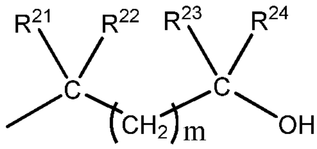

VII

$R^{23}$ and $R^{24}$ are each independently hydrogen or alkyl; $R^{21}$ and $R^{22}$ are each independently hydrogen, alkyl, or hydroxyl-substituted alkyl; and m is 0 to 10.

Preferred additive amino-alcohols are alkanes that are substituted with one, two, or three hydroxyl groups, exactly one amine group, and no other substituents that contain any atom other than carbon and hydrogen. More preferred additive amino-alcohols are alkanes that are substituted with one or two hydroxyl groups, exactly one amine group, and no other substituents that contain any atom other than carbon and hydrogen. Most preferred additive amino-alcohols are alkanes that are substituted with exactly one hydroxyl group, exactly one amine group, and no other substituents that contain any atom other than carbon and hydrogen. Preferred amino-alcohols are triethanolamine, diethanolamine, ethanolamine, 1-amino-2-propanol, 2-amino-1-butanol, 2-amino-2-methyl-1-propanol, and mixtures thereof. More preferred amino-alcohols are diethanolamine, ethanolamine, 1-amino-2-propanol, 2-amino-1-butanol, 2-amino-2-methyl-1-propanol, and mixtures thereof.

Preferred compounds (c) are ethylene diamine, diethylene triamine, ethylene glycol, 1,4-butanediol, diethylene glycol, ethanolamine, 1-amino-2-propanol, 2-amino-1-butanol, 2-amino-2-methyl-1-propanol, and mixtures thereof. More preferred are ethylene diamine, diethylene triamine, ethylene glycol, 1,4-butanediol, diethylene glycol, and mixtures thereof.

Preferred compounds (c) are additive diamines and additive diols.

Preferably, the ratio of the weight of compound (c) to the weight of amino resin is 2:100 or higher; more preferably 4.5:100 or higher. Preferably, the ratio of the weight of compound (c) to the weight of amino resin is 30:100 or lower; more preferably 18:100 or lower.

Among embodiments in which some or all of the amino resin is made using urea, it is preferred that the ratio of the weight of compound (c) to the weight of urea that is used to form the amino resin is 10:100 or higher; more preferably 20:100 or higher. Among such embodiments, it is preferred that the ratio of the weight of compound (c) to the weight of urea that is used to form the amino resin is 100:100 or lower; more preferably 75:100 or lower.

In preferred embodiments, the ratio of the sum of the weights of all amino resins to the weight of the core is 8:100 or more; more preferably 15:100 or more. In preferred embodiments, the ratio of the sum of the weights of all amino resins to the weight of the core is 60:100 or less; more preferably 40:100 or less; more preferably 25:100 or less.

The method of the present invention involves making a dispersion of the water-insoluble biocide in water, herein called "dispersion (I)." The method of the present invention also involves making a mixture (herein called "mixture (III)") that contains dispersion (I) and also contains one or more amino prepolymer (herein called "amino prepolymer (II)"). In the method of the present invention, a reaction is performed on mixture (III) to form one or more amino resin.

A preferred method of making dispersion (I) is as follows. An aqueous medium is provided at a temperature above the melting point of the water-insoluble biocide. Preferably the aqueous medium contains one or more coacervation agent (herein labeled "CA"). Preferably, CA is water-soluble. Preferably, CA is cationic (i.e., when dissolved in water, CA has a positive charge at a range of pH values that falls within or overlaps the range pH=4 to pH=8). Preferably, CA is an amino resin, an amino prepolymer, or a mixture thereof. Preferably, CA contains a reaction product of reactants that contain one or more monomer polyamine, formaldehyde, and, optionally, one or more diamine. More preferably, CA contains a reaction product of reactants that contain urea, formaldehyde, and one or more diamine selected from diethylenetriamine, triethylenetetramine, tetraethylenetriamine, or guanidine.

Preferably, water-insoluble biocide is provided in liquid form. If the melting point of the water-insoluble biocide is above 25°C, the water-insoluble biocide is preferably heated above its melting point and then used in liquid form. Preferably the water-insoluble biocide, in liquid form, is added to the aqueous medium.

Preferably, the ratio of the weight of water-insoluble biocide to the weight of water in dispersion (I) is 20:100 or more; more preferably 35:100 or more. Preferably, the ratio of the weight of the core to the sum of the weights of all amino resins is 70:100 or less; more preferably 60:100 or less.

Preferably, one or more emulsion stabilizer is also added to the aqueous medium. Emulsion stabilizers include polymeric stabilizers, nonionic surfactants, and anionic surfactants. Polymeric stabilizers are polymers that act to stabilize droplets of water-insoluble compound in an aqueous medium; polymeric stabilizers include, for example, copolymers of ethylene with polar monomers (such as, for example, maleic anhydride), polyvinyl alcohol, polymeric dispersants, and mixtures thereof. Nonionic surfactants include, for example, silicone surfactants, block copolymers of ethylene oxide with other alkylene oxides, and mixtures thereof. Preferred are anionic surfactants. Preferred anionic surfactants are sulfonates, sulfates, and mixtures thereof; more preferred are sulfates.

Preferably, the ratio of the weight of emulsion stabilizer to the weight of water-insoluble compound is 0.05:100 or more; more preferably 0.1 or more. Preferably, the ratio of the weight of emulsion stabilizer to the weight of water-insoluble compound is 0.4:100 or less; more preferably 0.2:100 or less.

Among embodiments in which CA and emulsion stabilizer are both used, it is contemplated that spherical droplets of water-insoluble compound are formed that are coated with a mixture of CA and emulsion stabilizer. Preferably, these spherical droplets have D[4,3] of 1 micrometer to 100 micrometer.

Preferably, two different amino prepolymers (herein called "PPU" and "PPM") are prepared and then are mixed with dispersion (I). Preferably, PPU is a reaction product of reactants that contain urea and formaldehyde. Preferred ratio of moles of formaldehyde to moles of urea is 50:100 or higher; more preferably 80:100 or higher; more preferably 110:100 or higher. Preferred ratio of moles of formaldehyde to moles of urea is 300:100 or lower; more preferably 220:100 or lower; more preferably 160:100 or lower.

Preferably, PPU is made by mixing urea, formaldehyde, and water. The preferred ratio of the sum of the weight of urea plus the weight of formaldehyde to the weight of water is 30:100 or higher; more preferably 60:100 or higher. The preferred ratio of the sum of the weight of urea plus the weight of formaldehyde to the weight of water is 140:100 or lower; more preferably 85:100 or lower. Preferably, the pH of the mixture of urea, formaldehyde, and water is adjusted by addition a basic reagent. Preferred basic reagents are compounds that have pKa of the conjugate acid of 6.0 or higher. Preferred basic reagents have boiling point at 1 atmosphere pressure of 100°C or higher. Preferred basic reagents are organic compounds. Preferably, after addition of basic reagent, the pH of the mixture is 7 to 9. Preferably, after addition of the basic reagent, the mixture is maintained at a temperature of 30°C to 95°C for 10 minutes to 3 hours. It is contemplated that some or all of the urea will react with some or all of the formaldehyde; the result, including the reaction product, the remaining urea (if any), and the remaining formaldehyde (if any) is considered the PPU. The mixture that results, which includes PPU, water, and basic reagent, is herein called the "PPU mixture."

Preferably, PPM is a reaction product of reactants that contain melamine and formaldehyde. Preferred ratio of moles of formaldehyde to moles of melamine is 80:100 or higher; more preferably 150:100 or higher; more preferably 220:100 or higher. Preferred ratio of moles of formaldehyde to moles of melamine is 450:100 or lower; more preferably 400:100 or lower; more preferably 350:100 or lower.

Preferably, PPM is made by mixing melamine, formaldehyde, and water. The preferred ratio of the sum of the weight of melamine plus the weight of formaldehyde to the weight of water is 10:100 or higher; more preferably 25:100 or higher. The preferred ratio of the sum of the weight of melamine plus the weight of formaldehyde to the weight of water is 100:100 or lower; more preferably 75:100 or lower; more preferably 50:100 or lower. Preferably, the pH of the mixture of melamine, formaldehyde, and water is adjusted by addition a basic reagent. Preferred basic reagents the same as those preferred for making PPU. Preferably, after addition of basic reagent, the pH of the mixture is 7 to 9. Preferably, after addition of the basic reagent, the mixture is maintained at a temperature of 30°C to 80°C for 10 minutes to 3 hours. It is contemplated that some or all of the melamine will react with some or all of the formaldehyde; the result, including the reaction product, remaining melamine (if any), and remaining formaldehyde (if any) is considered the PPM. The mixture that results, which includes PPM, water, and basic reagent, is herein called the "PPM mixture."

Preferably, PPU and PPM are added to dispersion (I). Preferably the PPU and PPM are either mixed together and then added to dispersion (I) or are added separately to dispersion (I), either simultaneously or sequentially or a combination thereof. After PPU and PPM have been added to dispersion (I), an acidic reagent is preferably added to the resulting mixture. Preferred acidic reagents have pKa of 5.0 or lower. Preferred acidic reagents are acetic acid, formic acid, hydrochloric acid, sulfuric acid, and citric acid. After addition of the acidic reagent, the pH of the mixture is preferably 4.25 to 5.25. Preferably the mixture is then maintained at 35°C to 70°C for 30 minutes to 6 hours. Then, preferably, additional acidic reagent is added to bring the pH to 2.5 to 3.3, and then, the mixture is preferably maintained at 35°C to 70°C for 8 to 36 hours.

Also contemplated are embodiments in which, after PPU and PPM have been added to dispersion (I), acidic reagent is added to bring the pH to 2.5 to 3.3, without pausing to maintain the pH at 4.25 to 5.25.

The practice of the present invention involves the use of one or more compound (c). Compound (c) may be added to the process of making the composition at any point or points in the process. Preferably, compound (c) is added at one or more of the following points: added to the PPU mixture prior to adding the PPU mixture to dispersion (I); added to the PPM mixture prior to adding the PPM mixture to dispersion (I); added to a mixture of the PPM mixture and the PPU mixture, prior to addition to dispersion (I); added to the mixture of dispersion (I), PPU, and PPM. When compound

(c) is added to the mixture of dispersion (I), PPU, and PPM, it is preferably added prior to the step of adding acidic reagent to bring the pH to 2.5 to 3.3.

It is contemplated that in various embodiments, compound (c) will partially or completely participate in the reaction that forms amino resin. It is contemplated that in other embodiments, compound (c) will not participate in that reaction.

The composition of the present invention may be used in any way. Preferably the composition is dried. The preferred method of drying is spray drying. Preferably the dried composition is mixed with other ingredients to form a non-aqueous liquid coating composition. A liquid coating composition has the following characteristics: it is in the liquid state at a range of temperatures that includes 15°C to 40°C; it contains one or more coating binder; and it contains one or more pigment. A coating binder is a substance that is capable of forming a film; that is, when the binder is present in a liquid coating composition, when that composition is applied as a layer on a substrate and then dried or allowed to dry at ambient temperature (which may be any temperature from 0°C to 45°C) to form a dry coating, the binder is capable of forming a continuous film in that dry coating. Preferred binders are soluble in the continuous liquid medium of the coating composition. Preferred binders contain one or more rosin, one or more polymer, or a mixture thereof. Preferred rosins include unmodified rosin and alkylated rosin esters. Preferred polymers include acrylic resin acid salts; more preferred are zinc and copper salts of acrylic resin acids. Acrylic resin acids are a group of related thermoplastic or thermosetting plastic substances derived from acrylic acid, methacrylic acid or other related compounds. A pigment is a particulate solid. A pigment is solid over a temperature range that includes the range -10°C to 95°C. Preferred pigments have weight-average diameter of the particles of 0.2 micron to 10 micron.

When dried composition of the present invention is used in making a liquid coating composition, the composition of the present invention becomes dispersed in the continuous medium of the coating composition. Preferably the amount of the composition of the present invention, by weight based on the weight of the liquid coating composition, is 1% or more; more preferably 2% or more. Preferably the amount of the composition of the present invention, by weight based on the weight of the liquid coating composition, is 7% or less; more preferably 5% or less.

Coating compositions that contain the composition of the present invention are preferably marine coating compositions; more preferably are marine anti-fouling coating compositions.

The following are examples of the present invention.

Abbreviations used herein are as follows:

| Abbreviation | Meaning |
|---|---|
| EDA | ethylenediamine |
| C385 | Cymel™ 385 crosslinking agent from Cytek. |
| DEG | diethyleneglycol |
| PTSA | p-toluenesulfonamide |
| DETA | diethylene triamine |
| EG | ethylene glycol |
| D | Day |

The synthesis procedure in Example 1 in US 6,486,099 was used to prepare samples. Differences between the synthesis procedures in US 6,486,099 and in the present invention are specified below.

An aqueous solution was stirred at 50°C containing 660.03 g water, 41.15 g U-Ramin™ P-1500 amino resin (40% aqueous solution, available from Mitsui Kagaku K.K.), and 7.95 g triethanolamine (20% aqueous solution) in a 3 L reaction vessel. The pH of the mixture was adjusted to 4.75 by adding 5% citric acid. 352,44g of Kathon™ 287T preservative (purity of 99% by weight, manufactured by The Dow Chemical Company) was melted in a 60°C water bath. The melted Kathon™ 287T preservative and 47.35 g of 1% aqueous sodium dodecylbenzenesulfonate (NEOPELEX™ surfactant, available from Kao K.K.) were added to the reaction vessel sequentially. The mixture was pumped through an IKA™ magic LAB™ dispersing machine at 7600 rpm and 360 ml/min for 10 minutes. With stirring, the UF and MF amino prepolymers were added to the reaction vessel over a 10 minute time period using an addition funnel.

The UF prepolymer was prepared by mixing 17.82 g urea and 33.46 g formalin (37% formaldehyde aqueous solution adjusted to pH 8.0 by addition of 20% triethanolamine aqueous solution) and 17.82 g water. The UF prepolymer solution was heated to 70°C and held there for 45 minutes.

The MF prepolymer was prepared by mixing 17.39 g melamine and 34.62 g formalin (37% formaldehyde aqueous solution adjusted to pH 8.0 by addition of 20% triethanolamine aqueous solution) and 62.09 g water. The MF prepolymer solution was heated to 50°C and held there for 60 minutes.

After the addition of the UF and MF amino prepolymers to the reaction vessel, the pH was adjusted to 4.75 with 10% citric acid aqueous solution and stirred at 50°C. After 2.5 hours, the pH was adjusted to 2.8 with 30% citric acid aqueous solution and stirred at 50°C from 14 to 24 hours. The mixture was cooled to ambient temperature, and 24.16 g ammonium chloride added. After 10 minutes, the pH was adjusted to 7.0 using 25% sodium hydroxide solution and stirred for 10 minutes. The pH was again adjusted to 7.0 using 25% sodium hydroxide solution and then stirred for an additional 100 minutes. The resulting slurry was filtered using a 100 micrometer sieve and rinsed with water. The filtered material was re-slurried with water and vacuum-filtered using Whatman 4.0 paper.

After vacuum filtration, the material was re-dispersed in water, to form a dispersion having 20% solid material by weight based on the weight of the dispersion. That dispersion was spray dried, using a Buchi Mini Spray Dryer B-290 (Manufactured by Buchi). Inlet temperature was set at 150°C, and pump percentage was adjusted to give outlet temperature of 85°C. Aspirator was run at 100%, and the pressure of atomization was 1.38 bar (20 psi).

The samples were made, using various additives, as shown in the tables below.

When an additive was used, one of two methods of addition was used. In the "norm" method, the additive was added after the UF and MF amino resins were added, after the pH was adjusted to 4.75, and just prior to adjusting the pH to 2.8, except in the samples specifically noted below. In the "PP" method, a mixture was made of the additive, the UF prepolymer, and the MF prepolymer; that mixture was then added to the dispersion of DCOIT.

When an additive was used, the amount of additive was characterized by the ratio ("A/U" in the table below) of the weight of additive to the weight of the urea used in making the UF resin. In the A/U column of the table below, samples in which that ratio was 25:100 are denoted "25," and samples in which that ratio was 50:100 are denoted "50."

Aged samples were stored at 80°C for 24 hours prior to testing.

Samples having sample number ending in "C" are comparative examples.

The total amount of DCOIT in each sample (reported below as "Tot. AI") was measured as follows. 30 mg of dry microcapsules were mixed with 25 ml of methanol, and the mixture was sonicated for 2 hours. The resulting slurry was filtered with a 0.45 micrometer nylon syringe filter, and the filtrate was analyzed for DCOIT content using high performance liquid chromatography (HPLC). The result is reported as weight percent of DCOIT based on the weight of dried microcapsules.

The amount of free DCOIT in each sample (reported below as "Fr. AI") was measured as follows. 250 mg of dry microcapsules were mixed with 10 ml of hexane. The resulting mixture was shaken for 1 hour. The resulting slurry was filtered with a 0.45 micrometer nylon syringe filter, and the filtrate was analyzed for DCOIT content using HPLC. The result is reported as weight percent of DCOIT based on the weight of dried microcapsules.

The HPLC method used was as follows. Samples were extracted in hexane. The extract was filtered and then injected into a reverse phase HPLC system with ultraviolet detection at 254 nanometers.

Solvent Stability of each sample (reported below as "Stab") was measured as follows. A sample of 600 mg of dry microcapsules was placed in a bottle and mixed with 50 grams of solvent. The solvent was a mixture of 40 parts by weight of methyl isobutyl ketone with 60 parts by weight of xylene. The bottle was allowed to stand undisturbed at ambient temperature (approximately 22°C) for at least one hour to allow the contents to settle. A sample of 20.0 microliter of liquid was removed from the bottle and placed in a vial along with 980 ml of acetonitrile The sample was tested for DCOIT content by HPLC. After the bottle was stored for 28 days at ambient temperature (between 18°C and 25°C), another sample of 20.0 microliter of liquid was removed from the bottle, placed in a vial along with 980 ml of acetonitrile, and tested for DCOIT content by HPLC. The reported result "solvent stability" represents the amount of DCOIT in the solvent at 28 days, by weight as a percentage of the amount of DCOIT originally present.

The particle size of each sample was measured with a Coulter light scattering instrument (Beckman Coulter Co.), using the Fraunhofer model. Before analysis, samples were dispersed in a solution in water of 1% (by weight) Tergitol™ surfactant (Dow Chemical Co.). Results are reported as D[4,3] in micrometers.

Artificial seawater was Ricca™ seawater (ASTM D1141 Substitute Ocean Water without heavy metals, available from Ricca chemicals).

The test solution contained artificial seawater plus 1 % $CuSO_4$ by weight based on the weight of the test solution and 0.68% Dowfax™ 2A1 surfactant (Dow Chemical Co.) by weight based on the weight of the test solution. The test solution was filtered before use, using 0.22 micrometer filter paper.

The release of DCOIT from the samples was measured as follows. 30 mg of dry microcapsules were placed in a jar of volume 118 ml (4 oz). 100 g of test solution was added. Samples were placed on a rack at ambient temperature (approximately 22°C). At various times, 1.000 ml was removed, filtered through a 0.2 micrometer filter, and analyzed for DCOIT content by HPLC. 1.000 ml of test solution was then added to the jar to maintain constant volume.

Sea Water Release Rate (SWRR) was calculated as follows.

$$\mathrm{SWRR} = [\,(\mathrm{CP41}) - (\mathrm{CP7})\,] / 34$$

where CP7 is the cumulative % of DCOIT released through day 7, and CP41 is the cumulative % DCOIT released through day 41. The units of SWRR are % per day.

The parameter "SWRR Maintained" is found by comparing the SWRR at day 41 for a given sample aged (S41A) with the SWRR at day 41 for the same sample unaged (S41U):

$$\text{SWRR Maintained} = 100 * \text{S41A} / \text{S41U}$$

Table 1: Definitions of Samples and Characterizations

| No. | Additive | Method | A/U | Tot. AI | Fr. AI | D[4,3] | Stab. |
|---|---|---|---|---|---|---|---|
| 1C | none | norm | 25 | 80 | 4 | 10 | 4 |
| 2 | EDA | norm | 25 | 84 | 1 | 36 | 15 |
| 3(1) | Repeat EDA | norm | 25 | 81 | 8 | 21 | 10 |
| 4 | EDA 50wt% | norm | 50 | 77 | 7 | 14 | 8 |
| 5 | DETA | norm | 25 | 79 | 5 | 12 | 6 |
| 6(2) | Butanediol + 385 | norm | 25 | 79 | 12 | 21 | 9 |
| 7 | DEG | norm | 25 | 73 | 5 | 10 | 3 |
| 8 | EG with PP | PP | 25 | 73 | 8 | 19 | 9 |
| 9C | Piperazine | norm | 25 | 79 | 3 | 11 | 3 |
| 10C | Propyl amine | norm | 25 | 78 | 7 | 20 | 11 |
| 11C | p-toluenesulfonamide | norm | 25 | 75 | 2 | 12 | 3 |
| 12C | Ethylene urea | norm | 25 | 79 | 4 | 10 | 4 |
| (1) repeat of sample 2<br>(2) the MF prepolymer was replaced with C385 | | | | | | | |

Table 2A: Cumulative % DCOIT based on total DCOIT loaded

| No. | Aged | D 7 | D 14 | D 21 | D 41 | D 56 | D 70 | D 84 | SWRR |
|---|---|---|---|---|---|---|---|---|---|
| 1C | no | 14 | 24 | | 61 | 75 | 88 | 98 | 1.4 |
| 1C | yes | 4 | 4 | | 6 | 7 | 8 | 10 | 0.06 |
| 2 | no | 15 | 23 | 30 | 48 | 56 | 61 | 67 | 0.9 |
| 2 | yes | 9 | 11 | 15 | 24 | 30 | 34 | 40 | 0.4 |
| 3 | no | 19 | 27 | 32 | 46 | | | | 0.79 |
| 3 | yes | 11 | 12 | 12 | 17 | | | | 0.18 |
| 4 | no | 18 | 24 | 36 | 53 | 64 | | | 1.0 |
| 4 | yes | 8 | 10 | 13 | 22 | 28 | | | 0.4 |
| 5 | no | 18 | 25 | 40 | 62 | 75 | | | 1.3 |
| 5 | yes | 5 | 6 | 7 | 11 | 14 | | | 0.18 |
| 6 | no | 19 | 28 | 37 | 55 | 64 | 70 | 78 | 1.06 |
| 6 | yes | 13 | 15 | 17 | 25 | 30 | 34 | 40 | 0.35 |

Table 2B: Cumulative % DCOIT based on total DCOIT loaded

| No. | Aged | D 7 | D 14 | D 21 | D 41 | D 56 | D 70 | D 84 | SWRR |
|---|---|---|---|---|---|---|---|---|---|
| 7 | no | 12 | 22 | 30 | 52 | 62 | 69 | 78 | 1.18 |
| 7 | yes | 7 | 9 | 11 | 19 | 25 | 30 | 36 | 0.35 |
| 8 | no | 17 | 27 | 36 | 56 | 65 | 70 | 77 | 1.15 |
| 8 | yes | 11 | 13 | 16 | 25 | 30 | 35 | 41 | 0.41 |
| 9C | no | 17 | 25 | 39 | | | | | 1.57 |
| 9C | yes | 5 | 5 | 6 | | | | | 0.07 |
| 10C | no | 18 | 23 | 34 | 39 | 58 | | | 0.62 |
| 10C | yes | 9 | 9 | 9 | 9 | 10 | | | 0 |
| 11C | no | 16 | 23 | 30 | 55 | 70 | | | 1.15 |
| 11C | yes | 3 | 3 | 3 | 6 | 8 | | | 0.08 |
| 12C | no | 15 | 20 | 29 | | | | | 1.0 |
| 12C | yes | 5 | 5 | 5 | | | | | 0 |

Table 3: SWRR Maintained

| Sample No. | SWRR Maintained |
|---|---|
| 1C | 4 |
| 2 | 44 |
| 3 | 23 |
| 4 | 40 |
| 5 | 14 |
| 6 | 33 |
| 7 | 30 |
| 8 | 36 |
| 9C | 5 |
| 10C | 0 |
| 11C | 7 |
| 12C | 0 |

The samples that are examples of the present invention all had acceptable "SWRR Maintained" results (14 or better), while the comparative examples all had unacceptable "SWRR Maintained" results (7 or lower). The results in Table 1 show that the examples of the present invention had acceptable characteristics in addition to improved SWRR Maintained.

## Claims

**1.** A composition comprising microcapsules,

wherein said microcapsules comprise a core and an outer shell,
wherein said core comprises a water-insoluble biocide that is 4,5-dichloro-2-n-octyl-4-isothiazolin-3-one,
and wherein said outer shell comprises one or more amino resin that is a reaction product of reactants comprising

(a) one or more monomer polyamine,
(b) one or more aldehyde, and
(c) one or more compound (c) selected from the group consisting of additive diamines, additive diols, additive amino-alcohols, and mixtures thereof.

**2.** The composition of claim 1, wherein said monomer polyamine comprises urea and melamine.

**3.** The composition of claim 1, wherein said compound (c) is selected from the group consisting of alkyl diols, ether diols, alkyl diamines, diamines in which two amine groups are attached to a skeleton that is made of two or more alkyl groups attached to each other through a bridge having structure -NH-, and mixtures thereof.

**4.** A method of making the composition of claim 1, comprising the steps of

(i) making a dispersion (I) of said water-insoluble biocide in water,
(ii) making one or more amino prepolymer (II),
(iii) making a mixture (III) comprising said dispersion (I), said compound (c), and said amino prepolymer (II), and
(iv) performing a reaction in said mixture (III) to form said amino resin.

**5.** The method of claim 4, further comprising the step:

(v) after said step (iv), spray drying said dispersion (I).

**Patentansprüche**

**1.** Eine Zusammensetzung, die Mikrokapseln beinhaltet,
wobei die Mikrokapseln einen Kern und eine Außenhülle beinhalten,
wobei der Kern ein wasserunlösliches Biozid beinhaltet, das 4,5-Dichlor-2-n-octyl-4-isothiazolin-3-on ist,
und wobei die Außenhülle ein oder mehrere Aminoharze beinhaltet, die ein Reaktionsprodukt von Reaktionsmitteln sind, die Folgendes beinhalten:

(a) ein oder mehrere Monomerpolyamine,
(b) ein oder mehrere Aldehyde und
(c) eine oder mehrere Verbindungen (c), ausgewählt aus der Gruppe, bestehend aus additiven Diaminen, additiven Diolen, additiven Aminoalkoholen und Mischungen davon.

**2.** Zusammensetzung gemäß Anspruch 1, wobei das Monomerpolyamin Harnstoff und Melamin beinhaltet.

**3.** Zusammensetzung gemäß Anspruch 1, wobei die Verbindung (c) ausgewählt ist aus der Gruppe, bestehend aus Alkyldiolen, Etherdiolen, Alkyldiaminen, Diaminen, bei denen zwei Amingruppen mit einem Gerüst verbunden sind, das aus zwei oder mehreren Alkylgruppen hergestellt ist, die durch eine Brücke mit der Struktur -NHmiteinander verbunden sind, und Mischungen davon.

**4.** Ein Verfahren zum Herstellen der Zusammensetzung gemäß Anspruch 1, das die folgenden Schritte beinhaltet:

(i) Herstellen einer Dispersion (I) des wasserunlöslichen Biozids in Wasser,
(ii) Herstellen eines oder mehrerer Aminopräpolymere (II),
(iii) Herstellen einer Mischung (III), welche die Dispersion (I), die Verbindung (c) und das Aminopräpolymer (II) beinhaltet, und
(iv) Durchführen einer Reaktion in der Mischung (III), um das Aminoharz zu bilden.

**5.** Verfahren gemäß Anspruch 4, das ferner den folgenden Schritt beinhaltet:

(v) nach Schritt (iv) Sprühtrocknen der Dispersion (I).

## Revendications

1. Une composition comprenant des microcapsules, où lesdites microcapsules comprennent un coeur et une enveloppe externe, où ledit coeur comprend un biocide non hydrosoluble qui est la 4,5-dichloro-2-n-octyl-4-isothiazolin-3-one, et où ladite enveloppe externe comprend une aminorésine ou plus qui est un produit de la réaction de réactifs comprenant

   (a) une polyamine monomère ou plus,
   (b) un aldéhyde ou plus, et
   (c) un composé (c) ou plus sélectionné dans le groupe constitué de diamines additives, de diols additifs, d'aminoalcools additifs, et de mélanges de ceux-ci.

2. La composition de la revendication 1, où ladite polyamine monomère comprend de l'urée et de la mélamine.

3. La composition de la revendication 1, où ledit composé (c) est sélectionné dans le groupe constitué d'alkyl diols, d'éther diols, d'alkyl diamines, de diamines dans lesquelles deux groupes amine sont fixés à un squelette qui est fait de deux groupes alkyle ou plus fixés l'un à l'autre par l'intermédiaire d'un pont ayant la structure -NH-, et de mélanges de ceux-ci.

4. Une méthode pour réaliser la composition de la revendication 1, comprenant les étapes consistant

   (i) à réaliser une dispersion (I) dudit biocide non hydrosoluble dans de l'eau,
   (ii) à réaliser un prépolymère aminé (II) ou plus,
   (iii) à réaliser un mélange (III) comprenant ladite dispersion (I), ledit composé (c), et ledit prépolymère aminé (II), et
   (iv) à effectuer une réaction dans ledit mélange (III) afin de former ladite aminorésine.

5. La méthode de la revendication 4, comprenant en sus l'étape consistant :

   (v) après ladite étape (iv), à sécher par atomisation ladite dispersion (I).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6486099 B
- WO 2006032019 A